# FASCICULE DE BREVET EUROPEEN

(11) **EP 3 558 669 B1**
(45) Date de publication et mention de la délivrance du brevet: **16.06.2021**
(21) Numéro de dépôt: 17832272.3
(22) Date de dépôt: 21.12.2017
(51) Int. Cl.: B32B 17/10

(54) **VITRAGE FEUILLETE COLORE**
FARBIGE VERBUNDVERGLASUNG
COLOURED LAMINATED GLAZING

(30) Priorité: 23.12.2016 FR 1663283
(43) Date de publication de la demande: 30.10.2019
(73) Titulaire: SAINT-GOBAIN GLASS FRANCE, 92400 Courbevoie (FR)
(72) Inventeur: COMPOINT, François, 37000 Tours (FR); GARNIER, Louis, 75012 Paris (FR); RACHET, Vincent, 45590 Saint-Cyr en Val (FR)
(74) Mandataire: Saint-Gobain Recherche
(86) Numéro de dépôt international: PCT/FR2017/053779
(87) Numéro de publication internationale: WO 2018/115768

(56) Documents cités:
- WO-A1-01/00404
- FR-A1- 2 925 483
- US-A- 2 739 080
- US-A- 5 059 254
- US-A1- 2004 028 953
- US-A1- 2006 191 625
- DATABASE WPI Week 201703 16 novembre 2016 (2016-11-16) Thomson Scientific, London, GB; AN 2016-73340X XP002771846, -& KR 101 671 192 B1 (RIGMAH GLASS CO LTD) 16 novembre 2016 (2016-11-16)

## Description

La présente invention porte sur un procédé de fabrication d'un vitrage feuilleté coloré, ainsi que sur le vitrage susceptible d'être obtenu par ce procédé.

Les vitrages feuilletés sont couramment utilisés dans le domaine de l'automobile, de l'aéronautique ou du bâtiment, puisqu'ils présentent l'avantage d'être des vitrages dits de « sécurité ». Ils sont constitués de deux feuilles de verre liées entre elles par une couche intercalaire thermoplastique. Lorsqu'on souhaite obtenir des verres feuilletés colorés, une des possibilités consiste à utiliser une couche intercalaire qui est elle-même colorée. La coloration est ainsi apportée lors du procédé de fabrication de l'intercalaire, comme ce qui est par exemple décrit dans la demande EP 1483319. Cette solution reste coûteuse et peu flexible pour l'utilisateur final. La coloration (niveau de teinte et choix de la couleur) est en effet imposée par le fabricant de la couche intercalaire. Une autre solution connue pour fabriquer des vitrages feuilletés colorés consiste à insérer entre une des feuilles de verre et la couche intercalaire thermoplastique une couche colorée à base de matrice qui peuvent être organiques ou mixtes inorganique/organique et qui comprennent des colorants ou pigments. La demande FR2925483 décrit par exemple la possibilité d'appliquer une couche de laque comprenant des pigments ou colorants sur une des feuilles de verre. Lorsque la couleur est apportée par l'ajout d'une couche colorée entre l'intercalaire thermoplastique et les feuilles de verres, il est plus difficile d'obtenir une coloration homogène sur des substrats de grande taille par des procédés de dépôt opérés en voie liquide. Les couches colorées sont de plus de relativement faible épaisseur. La demande de brevet FR 2401881 décrit un procédé permettant de colorer l'intercalaire thermoplastique par un procédé de thermo-impression en appliquant un support cellulosique temporaire comprenant la coloration ou le motif à transférer sur l'intercalaire thermoplastique. Les colorants présents sur le support sont transférés par sublimation vers l'intercalaire thermoplastique, puis le support est ensuite retiré avant assemblage du vitrage feuilleté. Ce type de procédé est lourd à mettre en œuvre car il ajoute des étapes de fabrication supplémentaire pour le transfert. D'autre part, les impressions ou transferts effectués par sublimation ne permettent pas de garantir que l'intercalaire thermoplastique est coloré sur toute son épaisseur. Le colorant a en effet tendance à rester en surface puisqu'il se refroidit et se solidifie dès qu'il atteint la surface à imprimer.

Le document US 2006/191625 A1 décrit un procédé de fabrication d'un vitrage feuilleté coloré comprenant le dépôt sur une feuille de verre d'une composition liquide qui contient un pigment, pour former une couche polymérique colorée, et l'assemblage de cette feuille de verre dans un vitrage feuilleté en utilisant une couche adhésive intercalaire. La migration de l'agent colorant vers la couche intercalaire n'est pas décrite.

On cherche à mettre un point un procédé de fabrication de vitrages feuilletés colorés qui soit simple, qui puisse être opéré sur des lignes de fabrication de vitrage feuilletés existantes, et qui permet de réduire les coûts de fabrication en utilisant des couches intercalaires thermoplastiques transparentes non colorées. C'est dans ce cadre que s'inscrit la présente invention qui propose un procédé de fabrication permettant de garantir des coûts de fabrication bas mais également une très bonne homogénéité de la coloration sur la totalité de la superficie du vitrage, même lorsque celui-ci est de grande taille.

Le procédé selon la présente invention est un procédé de fabrication d'un vitrage feuilleté coloré comprenant au moins deux feuilles de verre liées entre elles par un intercalaire thermoplastique transparent, non coloré avant l'étape d'assemblage finale du vitrage, et qui se colore pendant la fabrication du vitrage.

Ledit procédé de fabrication du vitrage feuilleté coloré comprend les étapes suivantes :
- dépôt par voie liquide sur une première feuille de verre d'une couche polymérique comprenant un agent colorant et des composés polymériques, la couche polymérique étant obtenue à partir d'une composition liquide comprenant au moins un oligomère uréthane-acrylate aliphatique, au moins un monomère (méth)acrylate mono-, bi ou tri-fonctionnel, au moins un initiateur de polymérisation et au moins un agent colorant,
- séchage et éventuellement durcissement de la couche polymérique,
- assemblage de la feuille de verre revêtue de la couche polymérique colorée avec un intercalaire thermoplastique transparent non coloré, et avec la deuxième feuille de verre, de telle sorte que la couche polymérique colorée soit en contact direct avec ledit intercalaire,
- dégazage pendant lequel l'air piégé entre les feuilles de verre et l'intercalaire thermoplastique est éliminé, et
- traitement thermique sous pression et/ou sous vide du verre feuilleté à une température comprise entre 60 et 200°C pendant lequel l'agent colorant présent dans la couche polymérique migre vers l'intercalaire thermoplastique et pendant lequel l'assemblage du vitrage feuilleté est effectué.

De façon avantageuse, le procédé selon la présente invention permet d'utiliser un intercalaire thermoplastique non coloré initialement, et donc moins onéreux que les solutions mettant en œuvre l'utilisation d'intercalaire thermoplastique déjà coloré. La coloration est apportée par la présence d'une couche polymérique, facile à appliquer par voie liquide et peu coûteuse, sur au moins une des faces internes d'une des feuilles de verre constitutives du vitrage feuilleté. Lors du procédé de fabrication du vitrage, et en particulier pendant l'assemblage des différentes parties constitutives du vitrage, un phénomène de migration de l'agent colorant se produit de façon uniforme sur la totalité de l'épaisseur de l'intercalaire polymérique. L'homogénéité de la coloration est ainsi garantie, même sur des substrats de grande taille, à partir d'un procédé simple à mettre en œuvre ne demandant pas de modifier les étapes classiques des procédés de fabrication d'un vitrage feuilleté (assemblage des différentes parties, dégazage et traitement thermique en vue du collage final). De façon surprenante, ce procédé permet d'obtenir des vitrages feuilletés d'une coloration homogène, sans nécessiter une qualité dite « optique » de la couche polymérique teintée. La phase d'assemblage et de traitement thermique corrige les imperfections de coloration qui peuvent éventuellement exister dans la couche polymérique colorée.

Au sens de la présente invention, on comprend par « face interne » d'une feuille de verre la face de la feuille qui se retrouve, après assemblage, en contact avec l'intercalaire thermoplastique. Les faces internes dans un vitrage feuilleté comprenant deux feuilles de verre sont souvent appelées face 2 et face 3, la face 2 appartenant à la première feuille et la face 3 à la seconde feuille de verre.

Dans le procédé selon la présente invention, les faces internes (ou encore face 2 ou 3) sont celles sur lesquelles est déposée la couche polymérique. Cette couche peut être déposée sur une face d'une des deux feuilles de verre constituant le vitrage feuilleté ou sur une face de chacune des feuilles de verre constituant le vitrage feuilleté.

La couche polymérique est une couche applicable par voie liquide. Le polymère peut être dissous dans un solvant pour rendre le dépôt par voie liquide possible. La composition liquide comprend au moins un oligomère uréthane-acrylate aliphatique, au moins un monomère (méth)acrylate mono, bi ou tri-fonctionnel, au moins un initiateur de polymérisation et au moins un agent colorant. De façon préférée, le monomère (méth)acrylate est mono- ou bi-fonctionnel et donc il comporte au plus deux sites réactifs. La fonctionnalité relativement basse des monomères utilisés pour polymériser la couche polymérique facilite la migration de l'agent colorant au sein de la couche.

La composition liquide comprend avantageusement en pourcentage massique par rapport à la masse totale des composés (méth)acrylates, de 30 à 80% en masse d'au moins un oligomère uréthane-acrylique aliphatique et de 20 à 70% en masse d'au moins un monomère (méth)acrylate mono ou bi-fonctionnel. L'agent colorant représente entre 0,01 et 10% en masse par rapport à la masse totale des composés polymériques. L'agent colorant est par exemple un composé organique. Il est inséré dans la composition polymérique à l'état moléculaire, c'est-à-dire qu'il est dissout dans la composition et ne forme pas de particules solides. De façon très avantageuse, le colorant possède des propriétés acido-basiques permettant d'augmenter son affinité avec l'intercalaire thermoplastique. Ainsi à titre d'exemple, le colorant est un composé organique de type acide de Lewis, et l'intercalaire thermoplastique est une base, ce qui permet de favoriser la migration du colorant depuis la couche polymérique vers l'intercalaire thermoplastique. On peut par exemple citer comme colorant les dérivés de la famille des anthraquinones (Acid Blue 25, Alizarin, Anthrapurpurin, Carminic acid, 1,4-Diamino-2,3-dihydroanthraquinone, 7,14-Dibenzpyrenequinone, Dibromoanthanthrone, 1,3-Dihydroxyanthraquinone, 1,4-Dihydroxyanthraquinone, Disperse Red 9, Disperse Red 11, Indanthrone blue, Morindone, Oil Blue 35, Oil Blue A, Parietin, Quinizarine Green SS, Remazol Brilliant Blue R, Solvent Violet 13, 1,2,4-Trihydroxyanthraquinone, Vat Orange 1, Vat Yellow 1) ou les produits des gammes Neozapon®, Irgasperse®, Basantol®, Orasol®, commercialisés par la société BASF.

La couche polymérique peut comprendre dans sa composition un agent promoteur d'adhésion, comme par exemple un silane ou tout autre composé promoteur d'adhésion à base d'un métal comme le titane, le zirconium, l'étain ou l'aluminium.

Le dépôt de la couche polymérique est effectué, sur une face d'au moins une des feuilles de verre, par application à température ambiante de ladite composition liquide, par enduction au rouleau, par aspersion, par trempage, par enduction au rideau ou par pulvérisation. De préférence, l'application de la composition liquide est effectuée par enduction au rouleau ou au rideau.

Après avoir été déposée sur un des faces d'au moins une feuille de verre, la couche polymérique est séchée et/ou durcie à une température inférieure à 200°C. Si la couche polymérique déposée contient un solvant, ce dernier va être évaporé lors de l'étape de séchage. La couche polymérique peut également être durcie lors de cette étape qui entraîne une cuisson/réticulation par exemple par UV, ou par faisceau d'électrons.

L'épaisseur de la couche polymérique durcie est avantageusement comprise entre 1 et 200 µm.

L'étape de dépôt de la couche polymérique peut être effectuée directement sur la ligne de fabrication de vitrage feuilleté et constitue alors la première étape lors de la fabrication en usine du vitrage feuilleté. L'étape de dépôt peut également être effectuée sur une autre ligne de fabrication que celle qu vitrage feuilleté. Dans ce cas, la ou les feuilles de verre revêtues de la couche de polymère arrivent sur la ligne de fabrication des vitrages feuilletés avec le revêtement polymérique séché et/ou durci.

La feuille de verre ainsi revêtue de la couche polymérique est ensuite assemblée avec l'intercalaire thermoplastique et avec une deuxième feuille de verre pour faire le vitrage feuilleté. La deuxième feuille de verre peut également comprendre, sur sa face destinée à être la face interne dans le vitrage feuilleté, une couche polymérique. Cette couche peut être identique à celle déposée sur la première feuille de verre.

Afin d'améliorer l'adhésion entre les différents éléments constituants le vitrage feuilleté, à savoir entre les feuilles de verre et l'intercalaire thermoplastique, le procédé selon l'invention peut comprendre une étape de traitement de la surface de la feuille de verre sur laquelle est déposée la couche polymérique colorée et/ou de la surface de la face de l'intercalaire thermoplastique en contact avec la couche polymérique par un agent promoteur d'adhésion.

L'intercalaire thermoplastique est du polyvinyle butyrale, du polyéthylène, de l'éthylène-acétate de vinyle, ou tout autre matériau thermoplastique. L'intercalaire peut être composé de plusieurs couches associées entre elles, la sous-couche en contact avec la couche polymérique étant une sous-couche de nature organique.

Le procédé selon l'invention permet avantageusement de préparer des verres feuilletés colorés sans nécessiter de modification des phases d'assemblage du vitrage feuilleté. A partir du moment où la ou les feuilles de verre constitutives du vitrage feuilleté sont revêtues de la couche polymérique colorée, elles sont assemblées avec l'intercalaire thermoplastique de façon usuelle part un traitement thermique à une température comprise entre 100 et 200°C, sous vide et/ou sous pression. Ce traitement thermique peut par exemple être effectué dans un autoclave à une température comprise entre 135 et 145°C, sous une pression comprise entre 5 et 14 bars.

L'invention porte également sur un vitrage feuilleté susceptible d'être obtenu par le procédé décrit ci-avant. Ce vitrage peut être utilisé dans le domaine du bâtiment, à usage décoratif notamment, ou bien en tant que vitrage automobile. Les vitrages feuilletés obtenus possèdent la résistance mécanique souhaitée pour ce type d'application et peuvent être considérés comme des vitrages de sécurité.

### Exemple 1 selon l'invention :

Une composition liquide comprenant un oligomère acrylate de type Sartomer CN9002 (oligomère uréthane-acrylate aliphatique bi-fonctionnel), CN131B (monomère monoacrylate aromatique), SR610 (oligomère acrylate polyéthylène glycol) et de monomère SR 410 (monomère acrylique aromatique monofonctionel) est préparée avec un ratio pondéral 50/50. Un colorant de type anthraquinone est ajoutée à la formulation d'acrylate, dans une proportion de 0,5% en poids par rapport au total de la matrice. Une quantité de 5 % en poids d'un photo-initiateur de type Speedcure 500 est ajouté au mélange précédent de sorte à permettre le démarrage de la polymérisation. La composition liquide ainsi obtenue est déposée par voie liquide par dépôt au rouleau (roll coating) sur un substrat en verre. Les paramètres du rouleau sont réglés de façon à obtenir une épaisseur humide de 40 µm (vitesse du rouleau applicateur comprise entre 15 et 25 m/min). La couche ainsi obtenue est durcie par irradiation UV (dose d'UVB de 280 mJ/cm2 environ, vitesse de défilement de 16m/min). L'épaisseur de la couche colorée sèche est d'environ 30 µm. Un intercalaire en PVB non coloré est posé sur la feuille de verre revêtue de la couche colorée et une deuxième feuille de verre est posée sur l'intercalaire de façon à refermer le vitrage feuilleté. L'ensemble est placé sous autoclave pendant 30 minutes, à 145°C sous une pression de 10 bars.

A la sortie de l'autoclave, on obtient un verre feuilleté coloré et transparent.

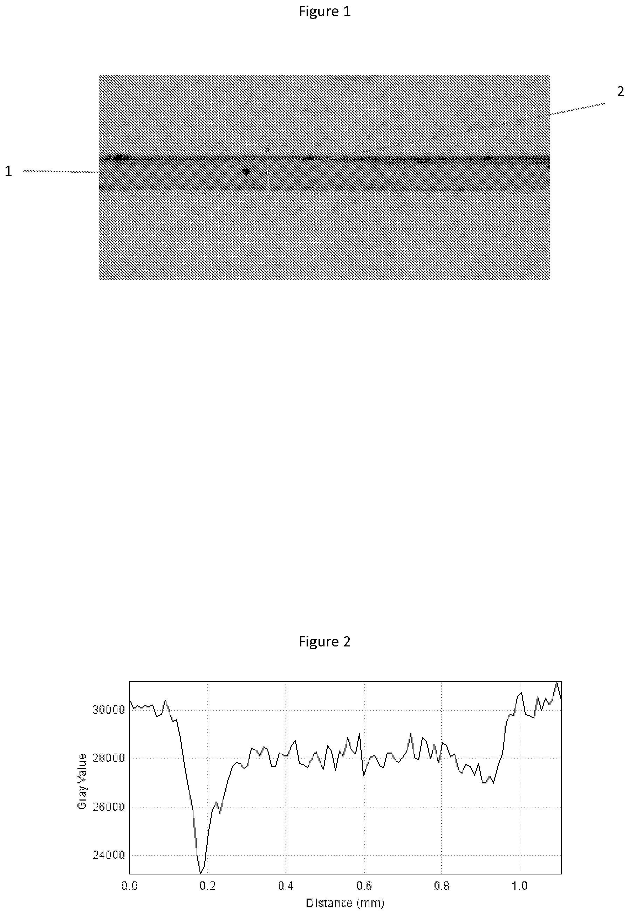

L'observation au microscope de la tranche du vitrage feuilleté ainsi obtenue (voir figure 1 qui correspond à l'observation faite avec un grossissement x10 sous éclairage monochromatique) montre que la coloration de l'intercalaire en PVB (1) est homogène. La feuille de PVB (1) qui est complètement teintée en rouge sur toute son épaisseur en raison de la migration du colorant initialement contenu dans la couche polymérique apparaît en gris au microscope. Les bandes plus foncées sur les côtés de la tranche sur l'image de la figure 1 correspondent à l'ombre générée par le bord de la tranche. Le niveau de gris est mesuré sur un profil correspondant à la zone (2) représentée sur la figure 1 avec Image J, qui donne les valeurs de gris en fonction de la distance est constant. Ce profil donné à la figure 2 confirme l'homogénéité de la coloration.

### Exemple 2 selon l'invention :

Une composition liquide comprenant un oligomère acrylate de type Sartomer CN9002 (oligomère uréthane-acrylate aliphatique bi-fonctionnel), CN131B (monomère monoacrylate aromatique), SR610 (oligomère acrylate polyéthylène glycol) et de monomère SR 410 (monomère acrylique aromatique monofonctionel) est préparée avec un ratio pondéral 50/50. Un colorant de type anthraquinone est ajoutée à la formulation d'acrylate, dans une proportion de 0,5% en poids par rapport au total de la matrice. Une quantité de 5 % en poids d'un photo-initiateur de type Speedcure 500 est ajouté au mélange précédent de sorte à permettre le démarrage de la polymérisation. La composition liquide ainsi obtenue est déposée par voie liquide par dépôt au rouleau (roll coating) sur un substrat en verre. Les paramètres du rouleau sont réglés de façon à obtenir une épaisseur humide de 15 µm (vitesse du rouleau applicateur comprise entre 15 et 25 m/min). La couche ainsi obtenue est durcie par irradiation UV (dose d'UVB de 280 mJ/cm2 environ, vitesse de défilement de 16m/min). L'épaisseur de la couche colorée sèche est d'environ 5 µm. Un intercalaire en PVB non coloré est posé sur la feuille de verre revêtue de la couche colorée et une deuxième feuille de verre est posée sur l'intercalaire de façon à refermer le vitrage feuilleté. L'ensemble est placé sous autoclave pendant 30 minutes, à 145°C sous une pression de 10 bars.

A la sortie de l'autoclave, on obtient un verre feuilleté coloré et transparent. La migration moléculaire du colorant depuis la couche colorée vers l'intercalaire PVB est homogène sur toute la tranche de l'intercalaire en PVB.

### Exemple 3 selon l'invention :

Une composition liquide comprenant un oligomère acrylate de type Sartomer CN9002 (oligomère uréthane-acrylate aliphatique bi-fonctionnel), CN131B (monomère monoacrylate aromatique), SR610 (oligomère acrylate polyéthylène glycol) et de monomère SR 410 (monomère acrylique aromatique monofonctionel) est préparée avec un ratio pondéral 50/50. Un colorant de type anthraquinone est ajoutée à la formulation d'acrylate, dans une quantité de 0,13 % en poids. 5 % en poids d'un photo-initiateur de type Speedcure 500 est ajouté au mélange précédent de sorte à permettre le démarrage de la polymérisation. La composition liquide ainsi obtenue est déposée par voie liquide par enduction au bar coater (tire film) mécanique sur un substrat en verre. Les paramètres sont réglés de façon à obtenir une couche humide de 200 µm d'épaisseur. La couche ainsi obtenue est durcie par irradiation UV (dose d'UVB de 250 mJ/cm2 environ, vitesse de défilement de 10 m/min). L'épaisseur de la couche colorée sèche est d'environ 150 µm. Un intercalaire en PVB non coloré est posé sur la feuille de verre revêtue de la couche colorée et une deuxième feuille de verre est posée sur l'intercalaire de façon à refermer le vitrage feuilleté. L'ensemble est placé sous autoclave pendant 45 minutes, à 140°C sous une pression de 10 bars.

A la sortie de l'autoclave, on obtient un verre feuilleté coloré et transparent. La migration moléculaire du colorant depuis la couche colorée vers l'intercalaire PVB est homogène sur toute la tranche de l'intercalaire en PVB.

### Exemple 4 selon l'invention :

Une composition liquide comprenant un oligomère acrylate de type Sartomer CN9002 (oligomère uréthane-acrylate aliphatique bi-fonctionnel), CN131B (monomère monoacrylate aromatique), SR610 (oligomère acrylate polyéthylène glycol) et de monomère SR 410 (monomère acrylique aromatique monofonctionel) est préparée avec un ratio pondéral 50/50. Un colorant de type anthraquinone est ajoutée à la formulation d'acrylate, dans une quantité de 0,5 % en poids. 5 % en poids d'un photo-initiateur de type Speedcure 500 est ajouté au mélange précédent de sorte à permettre le démarrage de la polymérisation. La composition liquide ainsi obtenue est déposée par voie liquide par enduction au bar coater (tire film) mécanique sur un substrat en verre. Les paramètres sont réglés de façon à obtenir une couche humide de 30 µm d'épaisseur. La couche ainsi obtenue est durcie par irradiation UV (dose d'UVB de 250 mJ/cm2 environ, vitesse de défilement de 10 m/min). L'épaisseur de la couche colorée sèche est d'environ 20 µm. Un intercalaire en PVB non coloré est posé sur la feuille de verre revêtue de la couche colorée et une deuxième feuille de verre est posée sur l'intercalaire de façon à refermer le vitrage feuilleté. L'ensemble est placé sous autoclave pendant 45 minutes, à 140°C sous une pression de 10 bars.

A la sortie de l'autoclave, on obtient un verre feuilleté coloré et transparent. La migration moléculaire du colorant depuis la couche colorée vers l'intercalaire PVB est homogène sur toute la tranche de l'intercalaire en PVB

Des tests de résistance mécanique par choc Charpy ont été réalisés sur une dizaine d'échantillons obtenus selon les exemples 1 à 4 décrits ci-avant. Ces tests d'impact consistent à lâcher depuis une hauteur déterminée un pendule équipé d'un impacteur sphérique en acier, avec une énergie de 2,3 J sur des échantillons de vitrage feuilleté d'une surface de 49 cm² constitué en épaisseur de deux feuilles verre de 2 mm, de la couche colorée de quelques µm et de l'intercalaire PVB de 0,8 mm, et à mesurer la perte de masse du vitrage après le choc. La plupart des vitrages testés ont montré que la face sur laquelle la couche polymérique est déposée n'est pas cassée. D'autre part, les échantillons montrent que la perte de masse est toujours inférieure 1%, voire, très souvent inférieure à 0,2%, ce qui traduit une très bonne résistance mécanique des échantillons testés.

Les performances de sécurité du vitrage feuilleté obtenu par le procédé selon la présente invention sont donc bien conservées.

## Revendications

1. Procédé de fabrication d'un vitrage feuilleté coloré comprenant au moins deux feuilles de verre liées entre elles par un intercalaire thermoplastique **caractérisé en ce qu'**il comprend les étapes suivantes :
- dépôt par voie liquide sur une première feuille de verre d'une couche polymérique comprenant un agent colorant et des composés polymériques, la couche polymérique étant obtenue à partir d'une composition liquide comprenant au moins un oligomère uréthane-acrylate aliphatique, au moins un monomère (méth)acrylate mono-, bi ou tri-fonctionnel, au moins un initiateur de polymérisation et au moins un agent colorant,
- séchage et éventuellement durcissement de la couche polymérique,
- assemblage de la feuille de verre revêtue de la couche polymérique colorée avec un intercalaire thermoplastique transparent non coloré, et avec la deuxième feuille de verre, de telle sorte que la couche polymérique colorée soit en contact direct avec ledit intercalaire,
- dégazage pendant lequel l'air piégé entre les feuilles de verre et l'intercalaire thermoplastique est éliminé, et
- traitement thermique sous pression et/ou sous vide du verre feuilleté à une température comprise entre 60 et 200°C pendant lequel l'agent colorant présent dans la couche polymérique migre vers l'intercalaire thermoplastique et pendant lequel l'assemblage du vitrage feuilleté est effectué.

2. Procédé selon la revendication 1 **caractérisé en ce que** la composition liquide comprend en pourcentage massique par rapport à la masse totale des composés (méth)acrylates, de 30 à 80% en masse d'au moins un oligomère uréthane-acrylique aliphatique et de 20 à 70% en masse d'au moins un monomère (méth)acrylate mono ou bi-fonctionnel.

3. Procédé selon l'une des revendications précédentes **caractérisé en ce que** l'agent colorant représente entre 0,01 et 10% en masse par rapport à la masse totale des composés polymériques.

4. Procédé selon l'une des revendications précédentes **caractérisé en ce que** la couche polymérique comprend un agent promoteur d'adhésion.

5. Procédé selon l'une des revendications précédentes **caractérisé en ce que** le dépôt de la couche polymérique est effectué par application à température ambiante de ladite composition liquide, par enduction au rouleau, par aspersion, par trempage, par enduction au rideau ou par pulvérisation.

6. Procédé selon la revendication précédente **caractérisé en ce que** l'application de la composition liquide est effectuée par enduction au rouleau ou au rideau.

7. Procédé selon l'une des revendications précédentes **caractérisé en ce que** la couche polymérique est durcie par séchage à une température inférieure à 200°C, par réticulation UV, ou par faisceau d'électrons.

8. Procédé selon l'une des revendications précédentes **caractérisé en ce que** l'épaisseur de la couche polymérique durcie est comprise entre 1 et 200 µm.

9. Procédé selon l'une des revendications précédentes **caractérisé en ce qu'**il comprend une étape de traitement de la surface de la feuille de verre sur laquelle est déposée la couche polymérique colorée et/ou de la surface de la face de l'intercalaire thermoplastique en contact avec la couche polymérique par un agent promoteur d'adhésion.

10. Procédé selon l'une des revendications précédentes **caractérisé en ce que** l'intercalaire thermoplastique est du polyvinyle butyrale, du polyéthylène, de l'éthylène-acétate de vinyle.

11. Vitrage feuilleté susceptible d'être obtenu par le procédé selon l'une des revendications précédentes.

## Patentansprüche

1. Verfahren zur Herstellung einer farbigen Verbundverglasung, umfassend mindestens zwei Glasscheiben, die durch eine thermoplastische Zwischenschicht miteinander verbunden sind, **dadurch gekennzeichnet, dass** es die folgenden Schritte umfasst:
- flüssige Abscheidung einer Polymerschicht, die ein Färbemittel und Polymerverbindungen umfasst, auf einer ersten Glasscheibe, wobei die Polymerschicht ausgehend von einer flüssigen Zusammensetzung erhalten wird, die mindestens ein aliphatisches Urethan-Acrylat-Oligomer, mindestens ein mono-, bi- oder trifunktionelles (Meth)acrylat-Monomer, mindestens einen Polymerisationsinitiator und mindestens ein Färbemittel umfasst,
- Trocknung und gegebenenfalls Aushärtung der Polymerschicht,
- Zusammenfügen der mit der farbigen Polymerschicht beschichteten Glasscheibe mit einer transparenten, nicht farbigen thermoplastischen Zwischenschicht und mit der zweiten Glasscheibe, sodass die farbige Polymerschicht in direktem Kontakt mit der Zwischenschicht ist,
- Entgasung, während der die zwischen den Glasscheiben und der thermoplastischen Zwischenschicht eingeschlossene Luft entfernt wird, und
- Wärmebehandlung des Verbundglases unter Druck und/oder Vakuum bei einer Temperatur zwischen 60 und 200 °C, während der das in der Polymerschicht vorhandene Färbemittel in Richtung der thermoplastischen Zwischenschicht migriert und während der das Zusammenfügen der Verbundverglasung erfolgt.

2. Verfahren nach Anspruch 1, **dadurch gekennzeichnet, dass** die flüssige Zusammensetzung in Masseprozent, bezogen auf die Gesamtmasse der (Meth)acrylatverbindungen, zu 30 bis 80 Masse-% mindestens ein aliphatisches Urethan-Acryl-Oligomer und zu 20 bis 70 Masse-% mindestens ein mono- oder bifunktionelles (Meth)acrylat-Monomer umfasst.

3. Verfahren nach einem der vorstehenden Ansprüche, **dadurch gekennzeichnet, dass** der Farbstoff zwischen 0,01 und 10 Masse-%, bezogen auf die Gesamtmasse der Polymerverbindungen, ausmacht.

4. Verfahren nach einem der vorstehenden Ansprüche, **dadurch gekennzeichnet, dass** die Polymerschicht einen Haftvermittler umfasst.

5. Verfahren nach einem der vorstehenden Ansprüche, **dadurch gekennzeichnet, dass** die Abscheidung der Polymerschicht durch Auftragen der flüssigen Zusammensetzung bei Raumtemperatur durch Walzenbeschichtung, durch Berieselung, durch Eintauchen, durch Vorhangbeschichtung oder durch Sprühen erfolgt.

6. Verfahren nach dem vorstehenden Anspruch, **dadurch gekennzeichnet, dass** das Auftragen der flüssigen Zusammensetzung durch Walzen- oder Vorhangbeschichtung erfolgt.

7. Verfahren nach einem der vorstehenden Ansprüche, **dadurch gekennzeichnet, dass** die Polymerschicht durch Trocknung bei einer Temperatur unterhalb von 200 °C, durch UV-Vernetzung oder durch Elektronenstrahl gehärtet wird.

8. Verfahren nach einem der vorstehenden Ansprüche, **dadurch gekennzeichnet, dass** die Dicke der gehärteten Polymerschicht zwischen 1 und 200 µm beträgt.

9. Verfahren nach einem der vorstehenden Ansprüche, **dadurch gekennzeichnet, dass** es einen Behandlungsschritt der Oberfläche der Glasscheibe, auf der die farbige Polymerschicht abgeschieden wird, und/oder der Oberfläche der Fläche der thermoplastischen Zwischenschicht, die mit der Polymerschicht in Kontakt ist, mit einem Haftvermittler umfasst.

10. Verfahren nach einem der vorstehenden Ansprüche, **dadurch gekennzeichnet, dass** die thermoplastische Zwischenschicht Polyvinylbutyral, Polyethylen, Ethylenvinylacetat ist.

11. Verbundglasscheibe, die durch das Verfahren nach einem der vorstehenden Ansprüche erhalten werden kann.

## Claims

1. A method for the manufacture of a colored laminated glazing comprising at least two glass sheets connected together by a thermoplastic interlayer **characterized in that** it comprises the following stages:
- liquid deposition on a first glass sheet of a polymeric layer comprising a coloring agent and polymeric compounds, the polymeric layer being obtained from a liquid composition comprising at least one aliphatic urethane/acrylate oligomer, at least one mono-, bi- or trifunctional (meth)acrylate monomer, at least one polymerization initiator and at least one coloring agent,
- drying and optionally curing of the polymeric layer,
- assembling of the glass sheet coated with the colored polymeric layer with a colorless transparent thermoplastic interlayer, and with the second glass sheet, so that the colored polymeric layer is in direct contact with said interlayer,
- degassing during which the air trapped between the glass sheets and the thermoplastic interlayer is removed, and
- heat treatment under pressure and/or under vacuum of the laminated glass at a temperature of between 60 and 200°c, during which the coloring agent present in the polymeric layer migrates toward the thermoplastic interlayer and during which the laminated glazing is assembled.

2. The method according to claim 1, **characterized in that** the liquid composition comprises as percentage by weight with respect to the total weight of the (meth)acrylate compounds, from 30% to 80% by weight of at least one aliphatic urethane/acrylate oligomer and from 20% to 70% by weight of at least one mono- or bifunctional (meth)acrylate monomer.

3. The method according to one of the preceding claims, **characterized in that** the coloring agent represents between 0.01% and 10% by weight, with respect to the total weight of the polymeric compounds.

4. The method according to one of the preceding claims, **characterized in that** the polymeric layer comprises an adhesion-promoting agent.

5. The method according to one of the preceding claims, **characterized in that** the polymeric layer is deposited by application at ambient temperature of said liquid composition by roll coating, by sprinkling, by dipping, by curtain coating or by spraying.

6. The method according to the preceding claim, **characterized in that** the liquid composition is applied by roll coating or by curtain coating.

7. The method according to one of the preceding claims, **characterized in that** the polymeric layer is cured by drying at a temperature of less than 200°C, by UV crosslinking or by an electron beam.

8. The method according to one of the preceding claims, **characterized in that** the thickness of the cured polymeric layer is between 1 and 200 µm.

9. The method according to one of the preceding claims, **characterized in that** it comprises a step of treatment by an adhesion-promoting agent of the surface of the glass sheet on which the colored polymeric layer is deposited and/or of the surface of the face of the thermoplastic interlayer in contact with the polymeric layer.

10. The method according to one of the preceding claims, **characterized in that** the thermoplastic interlayer is polyvinyl butyral, polyethylene or ethylene-vinyl acetate.

11. A laminated glazing capable of being obtained by the method according to one of the preceding claims.
